# EUROPÄISCHE PATENTSCHRIFT

(11) **EP 0 772 510 B1**
(45) Veröffentlichungstag und Bekanntmachung des Hinweises auf die Patenterteilung: **22.04.1998**
(21) Anmeldenummer: 95925687.6
(22) Anmeldetag: 13.07.1995
(51) Int. Cl.: B25J 18/06

(54) **PRÄZISE STEUERBARER FLEXIBLER AKTOR**
PRECISELY CONTROLLABLE FLEXIBLE ACTUATOR
ACTIONNEUR FLEXIBLE PILOTABLE AVEC PRECISION

(30) Priorität: 28.07.1994 DE 4426811
(43) Veröffentlichungstag der Anmeldung: 14.05.1997
(73) Patentinhaber: SIEMENS AKTIENGESELLSCHAFT, 80333 München (DE)
(72) Erfinder: FEITEN, Wendelin, D-85579 Neubiberg (DE)
(86) Internationale Anmeldenummer: DE9500918
(87) Internationale Veröffentlichungsnummer: WO9603260

(56) Entgegenhaltungen:
- DE-C- 4 337 096
- GB-A- 2 228 644
- US-A- 3 266 059

## Beschreibung

Immer häufiger werden auch komplizierte Handhabungen durch Maschinen verrichtet. In manchen Fällen müssen auch unzugängliche oder für den Menschen gefährliche Stellen durch Aktoren erreichbar sein. Beispiele solcher Aktoren sind Roboterarme, die in der industriellen Fertigung eingesetzt werden, oder Mikroaktoren, welche für Greifer beispielsweise Verwendung finden.

Vielfach sind industriell eingesetzte Aktoren komplizierte Geräte, welche mit umfangreicher Sensorik ausgestattet sind und deren Bewegungsmechanik eine aufwendige Regelung und Steuerung erfordert. Mit der zunehmenden Technisierung von Bereichen, die außerhalb sogenannter High-tech-Umgebungen liegen, erscheint es wünschenswert, kostengünstig zu fertigende und einfach zu steuernde Aktoren zur Verfügung zu haben. Ein künftiger Einsatzbereich solcher Low-cost-Geräte wäre beispielsweise bei Dienstleistungsrobotern in Büro- oder Haushaltsumgebungen denkbar.

Aktoren sind in großer Zahl bekannt. Aus der US-PS 32 66 059 ist ein flexibler vorgespannter Arm bekannt. Zur Bildung dieses Arms werden Metallstreifen mit U-förmigem Querschnittsprofil helikal verwunden. Jeweils zwei derartig ausgebildeter Streifen bilden einen Arm. Dieser ist dabei so aufgebaut, daß die U-förmigen Profile der beiden helikal verwundenen Metallstreifen miteinander verschränkt sind. Es wird also zum Aufbau eines Armes jeweils ein Metallstreifen benötigt, dessen U-Profil bezüglich der Längsachse des Armes nach außen und einer dessen U-Profil bezüglich der Längsachse des Armes nach innen zeigt. Die Metallstreifen können dabei durch eine Schraubfeder vorgespannt sein. Zur Streckung und Stauchung des Armes werden adäquat geführte Zugseile verwendet.

Aufgabe der Erfindung ist es einen flexiblen Aktor anzugeben, welcher insbesondere in Erstreckungsrichtung eine sehr große elastische Deformierbarkeit aufweist, dessen aufbietbare Kraft in jeder seiner Bewegungsrichtungen vorgebbar ist und der beliebig in starre und bewegbare Segmente von beliebiger Größe unterteilbar ist.

Diese Aufgabe wird gemäß den Merkmalen des Patentanspruchs 1 gelöst.

Weiterbildungen der Erfindung ergeben sich aus den Unteransprüchen.

Ein besonderer Vorteil des erfindungsgemäßen Aktors besteht darin, daß er aus einer in einem großen Bereich längselastischen Schraubenfeder ausgeführt wird. Hierdurch wird besonders einfach ein großer Bewegungsspielraum für einen am ersten Ende des Aktors angebrachten Effektor erreicht. Der erfindungsgemäße Aktor hat den weiteren Vorteil, daß die Steuerung oder die Regelung nicht so exakt ausgeführt werden muß, bzw. daß auf hochgenaue Sensorik verzichtet werden kann, da bei einem Anstoßen des Effektors, welcher beispielsweise an einem ersten Ende befestigt wird, durch die elastische Verformbarkeit des Aktors keine Gegenstände beschädigt werden. Durch die besondere Ausgestaltung der Windungsprofilform wird in Verbindung mit den vorgesehenen Arretierungsmitteln und deren fallweise Betätigung erreicht, daß mit den Zugsträngen eine Kraft aufgebracht werden kann, welche von der Federkonstante unabhängig ist.

Besonders vorteilhaft läßt sich der erfindungsgemäße Aktor in eine beliebige Form bringen. Durch eine Sorte von zusammenwirkenden Zugsträngen wird er gestaucht, durch die andere Sorte kann er gestreckt werden. In Verbindung mit den Arretierungsmitteln, welche separat ansteuerbar sind und benachbarte Windungen der Schraubenfeder gegeneinander blockieren können, kann eine beliebige gekrümmte und auch gestreckte Form des Aktors erzielt werden, da er auf beliebiger Länge steif bzw. flexibel gemacht werden kann.

Da die benachbarten Schraubenfederwindungen einen sehr geringen Abstand zueinander besitzen, ist es sinnvoll beim erfindungsgemäßen Aktor vorgesehen, Stellmittel zu verwenden, welche eine Längenänderung oder Lageänderung erfahren, wenn sie betätigt werden um damit Blockiermittel zu bewegen, welche zwei benachbarte Federwindungen in der Parallelzone gegeneinander blockieren.

Um eine günstige kompakte Bauform zu erzielen, ist es sinnvoll die Zugstränge für die Streckung der Schraubenfeder und der Zugstränge für die Stauchung der Schraubenfeder parallel zueinander zu führen.

Besonders günstig ist der Einsatz von kostengünstigen und leicht ansteuerbaren Stellgliedern, wie z.B. piezokeramischen, hydraulischen, thermischen, pneumatischen oder elektrostatischen sowie magnetischen Ausführungen.

Günstigerweise sind beim erfindungsgemäßen Aktor Blockiermittel vorgesehen, die durch Reibung zwei benachbarte Federwindungen gegeneinander blockieren, dadurch sinkt der Fertigungsaufwand für einen Aktor.

Besonders günstig sind als Arretierungsmittel Stäbe vorgesehen, welche in Löcher von benachbarten Federwindungen eingreifen, da dies ein technisch einfach zu realisierendes Arretierungsmittel darstellt und kostengünstig zu fertigen ist.

Vorteilhaft ist beim erfindungsgemaßen Aktor innerhalb der Parallelzone an jedem Zugstrang ein Arretierungsmittel vorgesehen. Dadurch wird erreicht, daß der Aktor auch in einer gekrümmten Form blockiert werden kann und dabei mittels der Arretierung eine höhere Stabilität erzielt wird.

Vorteilhaft sieht es die Erfindung vor, elektrisch leitende Zugstränge und Federn zu verwenden, da so auf einfache Art die Stellglieder mit Strom versorgt werden können.

Vorteilhaft weist ein erfindungsgemäßer Aktor Stellglieder auf, die drei Anschlüsse besitzen, wobei vom ersten Anschluß zum zweiten Anschluß eine Verbindung besteht und wenn das Stellglied geschaltet hat, der zweite Anschluß mit dem dritten Anschluß verbunden ist. Dadurch wird vorteilhafterweise erreicht, daß mit lediglich drei Signalleitungen beliebig viele Stellglieder angesteuert werden können, wenn ein Signal auf diese Weise seriell durchgeschaltet wird.

Durch das günstige Anbringen von Schaltern zur Unterbrechung des Stromkreises an die jeweiligen Anschlüsse von stellgliedern kann von außen durch geschickte Anwendung von Zug und Druck über die Zugstränge und fallweises Aktivieren und Loslassen der einzelnen Arretierungselemente eine beliebige Form des Aktors angesteuert werden.

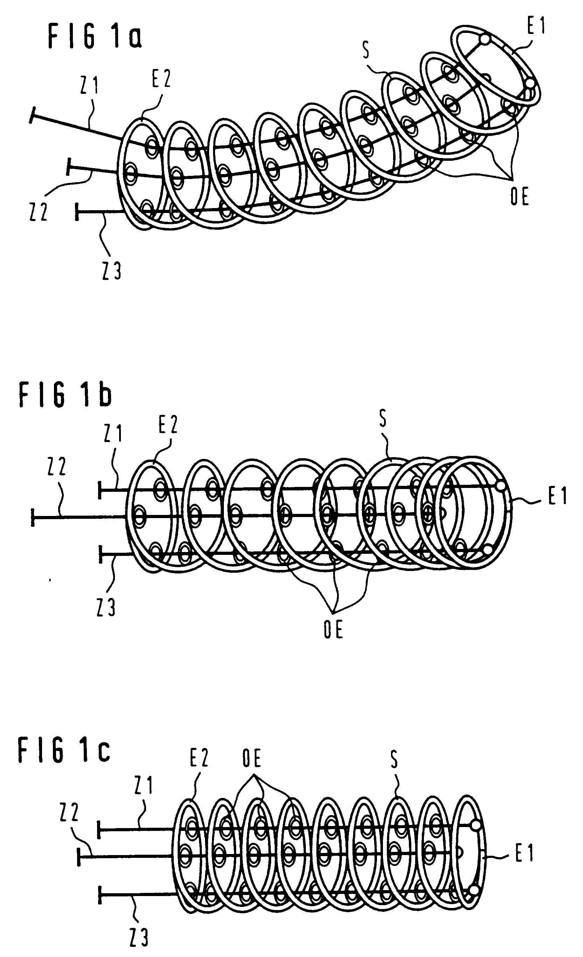

Im folgenden wird die Erfindung anhand von Figuren weiter erläutert.
Figur 1 zeigt einen schematisierten Aktor in drei unterschiedlichen Bewegungszuständen.
Figur 2 zeigt das Prinzip der Bewegungssteuerung an einem Aktor.
Figur 3 zeigt eine Ansicht eines Teils eines erfindungsgemäßen Aktors und eine zugehörige Schnittfläche.
Figur 4 zeigt ein Beispiel eines erfindungsgemäßen Aktors mit Stellglied im Schnitt.
Figur 5 gibt Beispiele für unterschiedliche Stellglieder an.
Figur 6 erläutert die Funktionsweise eines Stellgliedes mit drei Anschlüssen.
Figur 7 gibt ein Beispiel für die Steuerung von sieben Stellgliedern an.
Wie man aus Fig. 1 erkennt, besteht ein zur Bewegung des Aktors durch Stauchung der Schraubenfeder S vorgesehener Teil eines erfindungsgemäßen Aktors aus einer elastischen Schraubenfeder S, welche beispielsweise aus einem elastischen Kunststoff oder Stahl ausgeführt sein kann. Zur besseren Veranschaulichung der mechanischen Zusammenhänge und dem damit verbundenen Wirkungsprinzip wird zunächst dieser Teil des erfindungsgemäßen Aktors genauer erläutert.
Entlang dieser Schraubenfeder S sind gleichmäßig verteilt Führungsösen OE für Zugstränge Z1 bis Z3 angebracht. Wie Fig. 1 weiter zeigt, verlaufen die Zugstränge entlang des Aktors nahezu achsparallel. Diese Zugstränge Z1 bis Z3 sind am Ende E1 der Schraubenfeder S befestigt. Sie sind entlang der Schraubenfeder S durch die Ösen OE geführt und treten am Ende E2 der Schraubenfeder S frei beweglich aus. In Fig. 1 sind weiterhin drei unterschiedliche Bewegungszustände des erfindungsgemäßen Aktors dargestellt.

Im Teil a erkennt man, daß auf den Zugstrang Z1 Zug ausgeübt wurde. Wenn man sich das Ende E2 festgehalten denkt, so bewirkt dieser Zug, daß die Ösen, durch welche der Zugstrang Z1 geführt ist, näher aneinanderrücken. Dadurch wird der erfindungsgemäße Aktor in Richtung des Zugstranges Z1 gekrümmt. Gleichzeitig werden die frei beweglichen Zugstränge Z2 und Z3 in den Aktor eingezogen.

Fig. 1b zeigt dasselbe Beispiel für den Zugstrang Z2. Durch Ausübung von Zug auf den Zugstrang Z2 wird das Ende E1 in Richtung des Betrachters bewegt und der erfindungsgemäße Aktor entsprechend gekrümmt. Die Zugstränge Z1 und Z3 werden hierbei durch die entsprechenden Führungsösen in den Aktor eingezogen.

In Fig. 1c ist eine Verkürzung des erfindungsgemäßen Aktors veranschaulicht. Diese Verkürzung wird erreicht, indem gleichzeitig Zug auf die drei Zugstränge Z1 bis Z3 ausgeübt wird. Bei festgehaltenem Ende E2 bewirkt dieser Zug, daß die Schraubenfeder S entlang ihrer Längsrichtung verkürzt wird. Ein am Ende E1 befestigter Effektor wird dann entlang der Längsrichtung der Schraubenfeder S bewegt. Durch diese erfindungsgemäße Ausgestaltung eines Aktors erreicht man, daß ein Effektor innerhalb einer Kugel, deren Radius der Länge der Schraubenfeder S entspricht an nahezu jeden Punkt manövriert werden kann.

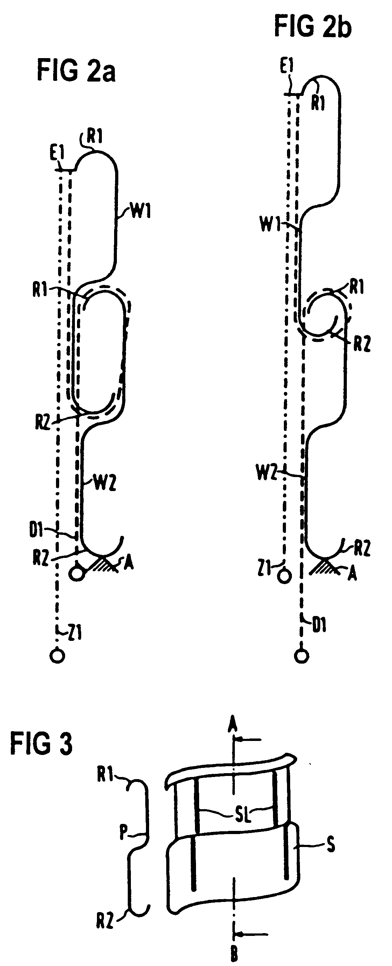

In Figur 2a und b sind zwei Schnitte durch einen erfindungsgemäßen Aktor dargestellt, um die prinzipielle Funktionsweise bei der Bewegung eines solches Aktors zu veranschaulichen. Dieses Schnittbild erhält man, wenn man eine Schnittebene wählt, welche die Federlängsachse des Aktors enthält und mit ihr alle Windungen der Schraubenfeder einmal durchschneidet. Blickt man nun auf diese Schnittebene so sieht man die einzelnen durchtrennten Windungen.
Diese Prinzipdarstellung wird in Figur 2 und in den folgenden Figuren verwendet, sofern das nicht anders beschrieben wurde. Um aus diesem Schnitt eine Schraubenfeder für einen erfindungsgemäßen Aktor zu erhalten, muß man es um die Federlängsachse rotieren und dabei eine Translation entlang der Federlängsachse durchführen.

Im einzelnen sind in Figur 2 zwei benachbarte Windungen W1 und W2 eines Aktors zu sehen. Weiterhin sind deren obere überkragende Ränder R1 und deren untere überkragende Ränder R2 gezeigt. Das Profil W2 ist dabei mit seinem unteren überkragenden Rand R2 an einem Auflager A befestigt.
Um eine Bewegung des Aktors zu erzeugen, sind an einem Ende E1 des erfindungsgemäßen Aktors Zugstränge Z1 und D1 angebracht. Figur 2a zeigt dabei den Schnitt durch einen Teil des erfindungsgemäßen Aktors, wobei dieser Aktor sich im gestauchten Zustand befindet, in welchem die Schraubenfeder zusammengepreßt ist. Dies läßt sich zum Beispiel daran erkennen, daß der Zugstrang Z1 aus dem Aktor herausgezogen ist.

Daneben ist der Zugstrang D1 dargestellt, welcher in Figur 3a in den Aktor eingezogen ist. Man kann auch erkennen, daß dieser Zugstrang D1 den oberen Rand R1 der Windung W2 des Aktors und den unteren Rand R2 der Windung W1 des Aktors umfaßt. Dabei bildet er eine Schlaufe um diese beiden Ränder.

Figur 2b zeigt einen Schnitt durch die Windungen eines erfindungsgemäßen Aktors, wobei sich der Aktor nun in einem gestreckten Zustand befindet. Dies kann man zum einen daran erkennen, daß der Zugstrang Z1 nun vollständig in den Aktor eingezogen ist und daß der Zugstrang D1 aus dem Aktor herausgezogen ist. Dieser Aktor in Figur 2b, geht also aus dem in Figur 2a hervor, indem man Zug auf den Zugstrang D1 ausübt. Dabei geschieht folgendes:
Die Windung W2 des erfindungsgemäßen Aktors ist fest gelagert. Der Zugstrang D1 ist an einem Ende E1 der Windung W1 des erfindungsgemäßen Aktors befestigt. Übt man nun Zug auf den Zugstrang D1 aus, so wird die Schlaufe, welche der Zugstrang D1 um den unteren Rand R2 der Windung W1 und den oberen Rand R1 der Windung W2 bildet, durch den Zug verkleinert. Dies führt dazu, daß sich der obere Rand R1 der Windung W2 des erfindungsgemäßen Aktors und der untere Rand R2 der Windung W1 des erfindungsgemäßen Aktors aufeinander zu bewegen. So wird erfindungsgemäß erreicht, daß die Schraubenfeder, die beispielsweise aus einem solchen Profil besteht, wie es hier im Schnittbild gezeigt ist, durch einen Zug an einem erfindungsgemäß vorgesehenen Zugstrang D1 gestreckt werden kann. Dieser Streckvorgang kann insbesondere auch entgegen eine von außen auf den Aktor einwirkende Kraft erfolgen.

Bei der Betrachtung von Figur 2 ist weiterhin zu beachten, daß es sich hierbei nur um eine prinzipielle Darstellung handelt. In einem real ausgeführten erfindungsgemäßen Aktor würden mehrere solcher Zugstränge Z1 und D1 paarweise zusammenarbeiten und beispielsweise gleichmäßig über den Umfang eines erfindungsgemäßen Aktors verteilt sein. Damit sind beliebige Bewegungen erzeugbar. Der erfindungsgemäße Aktor weist jedoch den großen Vorteil auf, daß durch den Zugstrang D1 auch in Längsrichtung Druck durch einen solcher Art ausgebildeten erfindungsgemäßen Aktor ausgeübt werden kann, der unabhängig ist von beispielsweise einer Federkonstante eines solchen Aktors.

Der zweite Bestandteil eines erfindungsgemäßen Aktors, welcher im Vergleich zu Figur 1 eine aktive Streckung unabhängig von der Federkonstante der Schraubenfeder S erlaubt, verbessert die Beweglichkeit des Aktors und vergrößert damit die Zahl seiner Einsatzgebiete entscheidend. Dieser erfindungsgemäße Aktor ist besonders leicht herzustellen und von seiner Konstruktion her nicht besonders aufwendig. Er erschließt damit neue Einsatzgebiete. Man kann sich beispielsweise vorstellen, daß er bei einem autonomen Saugroboter, oder allgemein bei einem Reinigungsroboter, oder beispielsweise einem Lackierungsroboter eingesetzt werden kann. Weitere Vorteile sind, daß er kostengünstig fertigbar ist und daß er nachgiebig ist in jenem Sinne, daß er
- bei unbeabsichtigtem Kontakt mit Hindernissen weder diese beschädigt noch selber beschädigt wird,
- sich in beengten Arbeitsräumen an die Kontur von Hindernissen bzw. offenen Passagen passiv anpassen kann.

Bei der Ausführung des erfindungsgemäßen Aktors können auch durchaus mehr als drei Zugstränge Verwendung finden. Wichtig ist es auch zu beachten, daß man durch die Aneinanderreihung mehrerer erfindungsgemäßer Aktoren die Zahl der Bewegungsfreiheitsgrade erhöht.

Figur 3 zeigt eine Teilansicht eines erfindungsgemäßen Aktors. Hier ist ein Ausschnitt der Schraubenfeder S dargestellt. Weiterhin ist ein Profil dieser Schraubenfeder P zu sehen, welches sich aus einem Schnitt entlang der Linie AB und einer Blickrichtung auf diese Schnittfläche ergibt. An der Seite dieser Schraubenfeder S sind Führungsschlitze für die erfindungsgemäß vorgesehenen Zugstränge D vorgesehen. Diese sind mit SL bezeichnet. Das sich aus dem Schnitt ergebende Profil P weist hier deutlich erkennbar überkragende Ränder R1 und R2 auf. Ein solches Profil kann beispielsweise aus einem sehr dünnen Federstahl hergestellt werden und in Form eines erfindungsgemäßen Aktors schraubenförmig aufgewickelt werden.

Auch hierbei handelt es sich nur um ein Beispiel. Es können auch andere Profilformen für einen erfindungsgemäßen Aktor verwendet werden. Sie müssen lediglich den mechanischen Anforderungen an einen solchen Aktor genügen und es muß durch die Profilform sichergestellt sein, daß zwei nebeneinanderliegende Windungen der Schraubenfeder mit ihren überkragenden Rändern gegeneinander verschiebbar sind und miteinander eine Parallelzone bilden, in welche ein Arretierungsmittel eingebracht werden kann, um die gegenseitige Verschiebbarkeit benachbarter Windungen zu blockieren. Dabei ist jedoch besonders darauf zu achten, daß durch die Arretierungsmittel die Beweglichkeit der Zugstränge nicht eingeschränkt wird

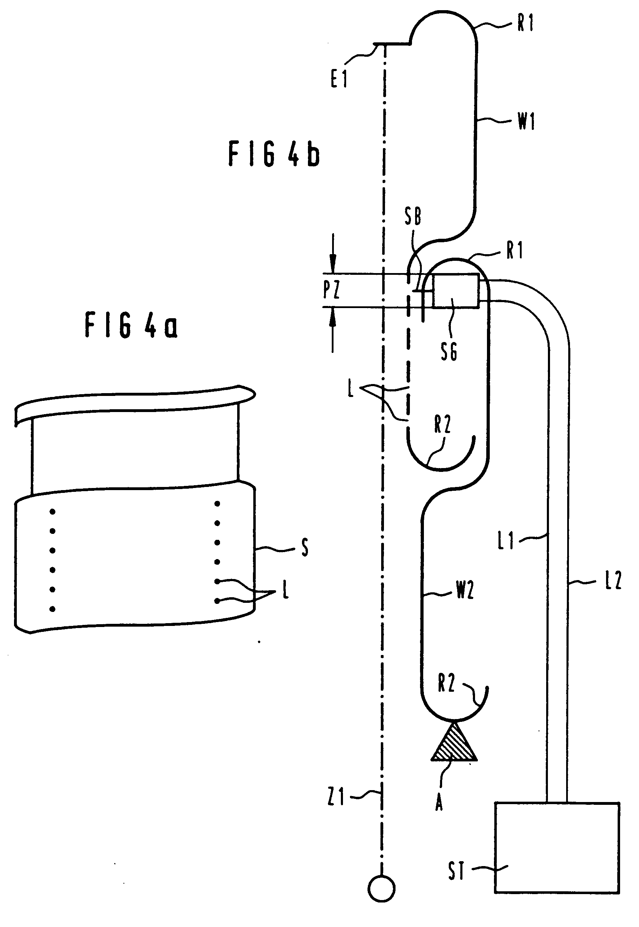

Figur 4 zeigt einen erfindungsgemäßen Aktor wie er auch in Figur 2 und Figur 3 schematisiert dargestellt wurde. Die Bezeichnungen sind analog verwendet. Der erfindungsgemäße Aktor weist hier jedoch zusätzlich ein Stellglied SG auf, welches in diesem Fall einen Stab SB besitzt, der in Löcher L von S eingreift.

Figur 4a zeigt hier als Beispiel ein Querschnittsprofil des erfindungsgemäßen Aktors. Deutlich sind die Löcher L im unteren Teil der Windung einer Schraubenfeder S zu erkennen. In Figur 4b ist analog zu Figur 2 schematisiert eine Schraubenfeder in Form von zwei Windungen W1 und W2 dargestellt. Hier kann der untere Teil der Schraubenfeder erkannt werden, der an einem Auflager A an seinem Rand befestigt ist. W2 besitzt einen oberen Rand R1, der den unteren Rand R2 von W1 überlappt. In einer Parallelzone PZ ist ein Stellglied SG befestigt, welches einen Stab SB besitzt, der in Löcher L an der Windung W1 eingreifen kann. In diesem Fall sind mehrere Löcher L an der Windung W1 angebracht.

Da hier der untere Teil der Schraubenfeder dargestellt ist, besitzt W2 keine solchen Löcher. Dies stellt jedoch keine Einschränkung der erfindungsgemäßen Ausführungsform eines Aktors dar. Primär sollte überall, wo es technisch sinnvoll ist und realisierungstechnisch gewünscht wird, ein Stellglied angebracht werden und entsprechende Arretierungsmittel bzw. Blockierungsmittel an den benachbarten Federwindungen in der Parallelzone vorgesehen sein. Das hier dargestellte Stellglied SG ist mit zwei Leitungen L1 und L2 mit einer Steuerung St verbunden. Durch diese Steuerung kann das Stellglied angesteuert werden und es wird dadurch bewirkt, daß der Stab SB ausfährt und in ein Loch L der benachbarten Federwindung W1 eingreift. Hierdurch wird beispielsweise die Schraubenfeder entlang des Zugstranges Z1 arretiert, und zwar hier im Bereich der Windung W1 und W2. Dies kann jedoch entlang der anderen Zugstränge und auch an anderen benachbarten Windungen der Schraubenfeder separat durch eine Steuerung St koordiniert erfolgen.

Durch sinnvolles Steuern von Zug und fallweise Druck über die einzelnen Zugstränge in Verbindung mit der Ansteuerung der einzelnen Stellglieder, welcher fallweise blockieren oder freigeben können, kann eine beliebige Form des Aktors erzielt werden.

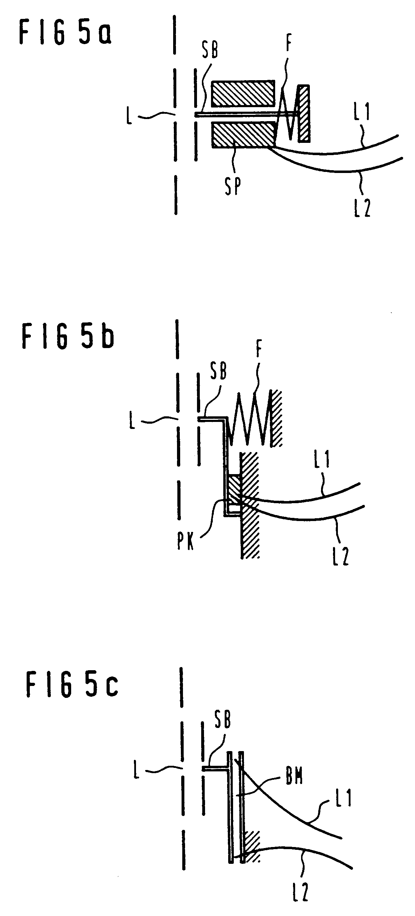

Figur 5 zeigt drei Beispiele für erfindungsgemäße Stellglieder SG. Figur 5a zeigt ein magnetisches Stellglied. Dort ist eine Spule SP vorgesehen und ein Stab SB, der mit einer Rückholfeder F versehen ist. Durch Betätigung des Stellgliedes über L1 und L2, d.h. durch Magnetisierung der Spule wird der Stab SB in das Loch L geführt, welches sich an der benachbarten Federwindung befindet. Bei all diesen Stellgliedern ist zu beachten, daß das Stellglied an einer Federwindung befestigt ist und sich das Loch an einer benachbarten Federwindung befindet.

Figur 5b zeigt ein piezokeramisches Stellglied. Dazu ist eine Piezokeramik PK vorgesehen, welche mittels Leitungen L1 und L2 durch eine Steuerung aktiviert werden kann. Durch eine Längenänderung über einen Hebelarm wird der Stab SB in das Loch L in der anderen Windung der Schraubenfeder geführt. Eine Rückholfeder F zieht nach Deaktivierung der Piezokeramik den Stab SB wieder aus dem Loch zurück und gibt somit die Federwindung wieder frei.

Figur 5c zeigt ein Stellglied in Form eines Bimetalls BM. Durch Leitungen L1 und L2 wird das Bimetall mit Strom versorgt und verbiegt sich anschließend, so daß der Stab SB das Loch L an der benachbarten Federwindung geführt wird und damit die beiden Federwindungen gegeneinander blockiert. Die Verwendung eines Stabes in Verbindung mit einem Loch, in welches dieser Stab SB eingreift, führt dazu, daß eine hohe Stabilität bei relativ geringem Fertigungsaufwand erzielt werden kann.

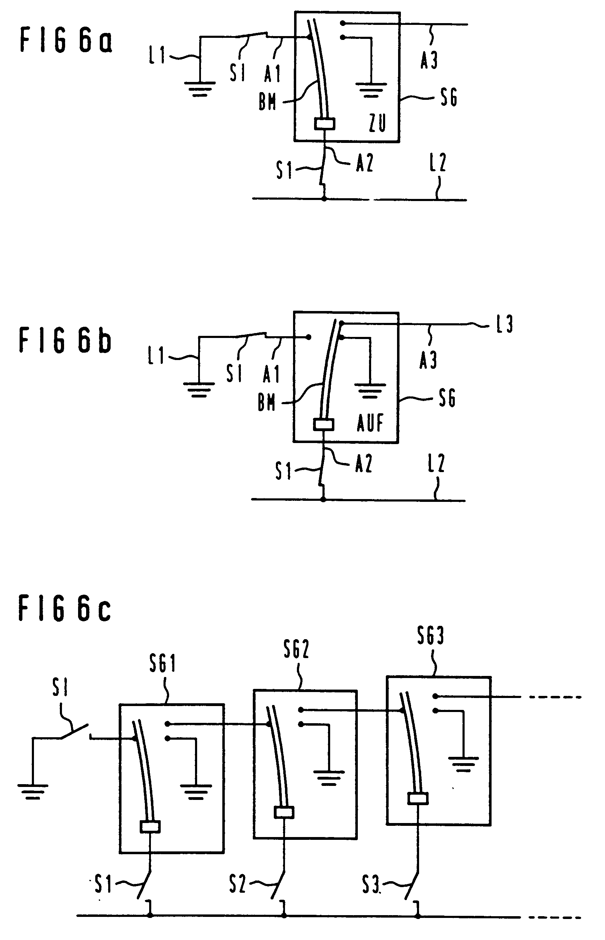

Figur 6 zeigt das Zusammenwirken der drei Anschlüsse an den Stellgliedern. Im Teil a ist ein Stellglied SG dargestellt, welches mit einem Bimetall BM arbeitet. Es sind drei Anschlüsse A1 bis A3 vorgesehen. Zur Ansteuerung des Stellgliedes wird zwischen der Leitung L2 und L1 ein Spannungspotential angelegt, und der Schalter SI und S1 wird geschlossen. Der Stromfluß im Bimetall führt dazu, daß dieses sich erhitzt und sich verbiegt. Anschließend erhält man den Zustand, welcher in Figur 6b dargestellt ist. Nach Verbiegung des Bimetalls BM geht dieses in Selbsthaltung, da nun der Strom über die Leitung L2 den Schalter S1 am Anschluß A2 zum Anschluß A3, welcher mit der Leitung L3 verbunden ist, fließt. Beispielsweise blockiert das Stellglied in Figur 6a benachbarte Federwindungen und Figur 6b zeigt den geöffneten Zustand.

Figur 6c zeigt, wie mit Hilfe von lediglich zwei Leitungen und mehreren Schaltern Stellglieder SG1 bis SG3 seriell geschaltet werden können. Beispielsweise werden in dieser Ausführungsform der Erfindung die Stellglieder um eine Schaltlogik erweitert, die es erlaubt, alle Blockiermittel auf dem Aktor in einer Kette anzuordnen und mit dieser Kette seriell anzusprechen. Anstatt eines Bimetalls kann jedes beliebige Stellmittel, welches bereits beschrieben wurde, verwendet werden. Mit der in Figur 2c dargestellten Anordnung läßt sich der Abstand zwischen je zwei Windungen der Schraubenfeder entlang jedem Zugstrang beliebig verstellen. Figur 2c zeigt hier die Ausgangslage bzw. Ruhelage, in der beispielsweise alle Blockiermittel geschlossen sind. Um die serielle Beschaltung der Kette zu starten, werden zunächst die Schalter SI und S1 geschlossen. Dadurch schaltet das erste Element, d.h. das entsprechende Blockiermittel wird geöffnet und gleichzeitig der serielle Eingang des nächsten Elements in der Kette beschaltet (hier wird dieser beispielsweise auf Masse gelegt). Das erste Element SG1 befindet sich nun in einer selbsthaltenden Lage, d.h. es bleibt so lange aktiv, wie der Schalter S1 geschlossen ist. In dieser Phase wird beispielsweise über den Zugstrang die Entfernung der beiden ersten Windungen der Feder entlang dem ersten Zugseil auf den gewünschten Wert eingestellt. Anschließend kann beispielsweise der Schalter S1 wieder geöffnet werden und wird erst wieder geschlossen, wenn ein neuer Impuls über die Kette geschickt werden soll. Nun kann beispielsweise über den Schalter S2 auch das zweite Element (allgemein jeweils das nächste Element der Kette) aktiviert werden. Wenn dies geschehen ist, kann das erste Element deaktiviert, d.h. der Schalter S1 geöffnet werden. Damit schließt sich das Blockiermittel wieder und die erste Windung ist entlang beispielsweise nur einem ersten Zugstrang auf ihrem Sollwert arretiert.

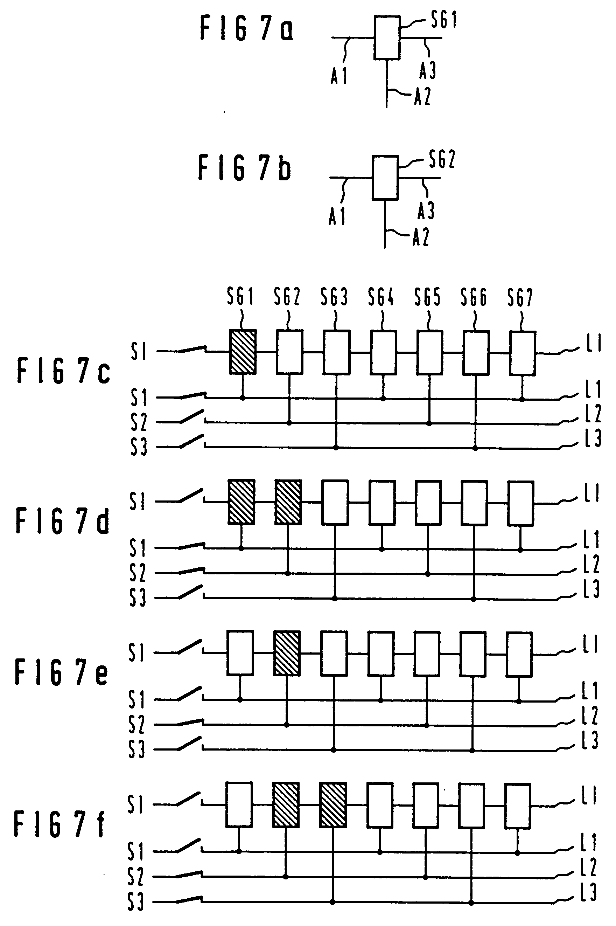

In dieser Ausführungsform kann ein Stellglied SG beispielsweise nur dann aktiv werden, wenn an seinem seriellen Eingang ein Impuls anliegt (hier beispielsweise wenn er auf Masse gelegt ist). Vorteilhafterweise ist es daher nicht mehr erforderlich, für jedes Stellglied SG eine eigene Leitung zu führen; es reichen bereits drei Leitungen, die für die Segmente in drei Gruppen parallel beschaltbar sind. Detaillierter wird dies in Figur 7 erläutert.

Figur 7 zeigt ein Beispiel zur Steuerung von Stellgliedern SG1 bis SG7 anhand von vier Schaltern SI, S1, S2 und S3 mit Hilfe von vier Steuerleitungen LI, L1, L2 und L3. Jedes Stellglied SG ist hierbei mit drei Anschlüssen A1 bis A3 versehen. Der aktivierte Zustand, d.h. der Zustand, in dem das Stellglied blockiert, ist dunkel schraffiert. Hier kann beispielsweise eine vorteilhafte Realisierung des Prinzips durchgeführt werden. Danach werden als Zuleitungen beispielsweise Zugstränge verwendet und als Masse die Feder selbst. Als Zusatzaufwand bleibt dann lediglich beispielsweise neben den eigentlichen kombinierten Stell- und Schaltgliedern nur noch eine Leitung, die entlang den Windungen der Schraubenfeder von Element zu Element geführt wird. Figur 7a zeigt ein solches Stellglied SG1 im aktivierten Zustand. Figur 7B zeigt ein solches Stellglied SG2 im freigegebenen Zustand, d.h. die benachbarten Federwindungen werden durch es nicht blockiert. In Figur 7c ist das erste Stellglied SG1 blockiert. Durch Schließung des Stromkreises mit Hilfe des Schalters SI und S1 wird dieser Zustand erreicht. Nach Öffnen des Schalters SI fließt der Strom im Stellglied SG1 über den Schalter S1 zur Masse und weiter zum Stellglied SG2, welches mit Hilfe des Schalters S2 aktiviert wird. Dieser Zustand ist in Figur 7d dargestellt. In Figur 7e wird das Stellglied SG1 durch Öffnen des Schalters SI freigegeben. Das Stellglied SG2 bleibt in Selbsthaltung, da der Schalter S2 noch geschlossen ist. In Figur 7f wird das Stellglied SG3 mit Hilfe des Schalters S3 aktiviert.

Die Bezeichnungen von Figur 7c geltenden für die nachfolgenden Figurenteile analog und zwar für die jeweils übereinanderliegenden Stellglieder sind dieselben Bezeichnungen zu verwenden. Durch diese vorteilhafte Ausführungsform der Stellglieder und die entsprechende Verdrahtung kann kostengünstig und technisch einfach zu realisieren jedes Stellglied für sich angesteuert werden. Die Erfindung soll jedoch nicht auf diesen Anwendungsfall beschränkt sein. Hier wurde lediglich in Betracht gezogen, daß ein mechanisch einfach aufgebauter Aktor kostengünstig zu realisieren sein sollte und mit Hinblick auf einen Einsatz in Konsumerprodukten technisch einfach und robust sein sollte.

## Patentansprüche

1. Flexibler Aktor,
a) bei dem eine Schraubenfeder (S) aus mindestens einem elastisch verformbaren Material vorgesehen ist,
b) bei dem die Querschnittsfläche einer Windung der Schraubenfeder (S) in Längsrichtung der Schraubenfeder ein längliches Profil (P) aufweist, welches an seinen Enden jeweils einen überkragenden Rand (R1,R2) besitzt, wobei der erste Rand (R1) zur Federlängsachse hin und der zweite Rand (R2) von der Federlängsachse weg überkragt,
c) bei dem die Schraubenfeder (S) so ausgestaltet ist, daß sich der jeweils erste Rand (R1) und der jeweils zweite Rand (R2) von zwei benachbarten Windungen (W1,W2) der Schraubenfeder (S) in einem Überlappungsbereich überlappen,
d) bei dem der erste und/oder zweite Rand (R1,R2) im Überlappungsbereich so ausgeführt ist, daß er im wesentlichen parallel zur jeweils benachbarten Windung (W1,W2) der Schraubenfeder (S) verläuft, so daß er mit ihr eine Parallelzone (PZ) bildet,
e) bei dem an mindestens einer Stelle einer jeweiligen Parallelzone (PZ) ein steuerbares Arretierungsmittel (SG) vorgesehen ist, mit dem die Verschiebbarkeit der benachbarten Windungen (W1,W2) gegeneinander blockierbar ist
f) bei dem am Umfang der Schraubenfeder gleichmäßig verteilt Führungsösen (OE) so vorgesehen sind, daß sie in Erstreckungsrichtung der Schraubenfeder auf mindestens drei ersten parallelen Achsen liegen, welche nahezu gleichen Abstand voneinander haben,
g) bei dem entlang der ersten parallelen Achsen durch die Ösen (OE) erste Zugstränge (Z1,Z2,Z3) geführt sind, welche alle am ersten Ende (E1) der Schraubenfeder (S) befestigt sind,
h) und bei dem eine gewünschte Bewegungsrichtung dadurch erzeugt wird, daß auf mindestens einen der Zugstränge (Z1,Z2,Z3) am zweiten Ende (E2) der Schraubenfeder (S) Zug ausgeübt wird und dadurch die Führungsösen (OE), durch welche dieser mindestens eine erste Zugstrang (Z1,Z2,Z3) geführt ist in Abhängigkeit des mindestens einen steuerbaren Arretierungsmittels (SG) näher aneinander rücken.

2. Flexibler Aktor nach Anspruch 1,
a) bei dem am Umfang der Schraubenfeder gleichmäßig verteilt Führungsschlitze (SL) so vorgesehen sind, daß sie in Erstreckungsrichtung der Schraubenfeder auf mindestens drei zweiten parallelen Achsen liegen, welche nahezu gleichen Abstand voneinander haben,
b) bei dem entlang der zweiten parallelen Achsen durch die Führungsschlitze (SL) zweite Zugstränge (D1,D2,D3) so geführt sind, daß sie jeweils die sich überlappenden ersten und zweiten Ränder in Form jeweils mindestens einer Schlaufe umfassen, wobei diese zweiten Zugstränge (D1,D2,D3) alle am ersten Ende (E1) der Schraubenfeder (S) befestigt sind,
c) und bei dem eine gewünschte Bewegungsrichtung dadurch erzeugt wird, daß auf mindestens einen der Zugstränge (Z1,Z2,Z3,D1,D2,D3) am zweiten Ende (E2) der Schraubenfeder (S) Zug ausgeübt wird und dadurch in Abhängigkeit des mindestens einen steuerbaren Arretierungsmittels (SG) die Führungsösen (OE), durch welche dieser mindestens eine erste Zugstrang (Z1,Z2,Z3) geführt ist näher aneinander rücken, beziehungsweise die sich überlappenden Ränder welche dieser Zugstrang (D1,D2,D3) umfaßt näher aneinander rücken.

3. Flexibler Aktor nach einem der Ansprüche 1 bis 2 , bei dem als Arretierungsmittel ein Stellglied (SG) vorgesehen ist, welches ein Blockiermittel (SB) aufweist, daß bei Ansteuerung des Stellgliedes eine Bewegung erfährt, wobei das Stellglied an einer der benachbarten Windungen (W1,W2) befestigt ist und mit dem Blockiermittel die jeweils andere Windung (W2,W1) blockiert.

4. Flexibler Aktor nach einem der Ansprüche 1 bis 3, bei dem die ersten und zweiten parallelen Achsen übereinander liegen.

5. Flexibler Aktor nach einem der Ansprüche 1 bis 4, bei dem das Stellglied (SG) mindestens als thermisches, hydraulisches, magnetisches, pneumatisches, piezokeramisches, oder elektrostatisches Stellglied ausgeführt ist.

6. Flexibler Aktor nach einem der Ansprüche 1 bis 5, bei dem die Arretierung durch Reibung erfolgt.

7. Flexibler Aktor nach einem der vorangehenden Ansprüche, bei dem als Arretierungsmittel ein Stab (SB) von beliebigem Querschnitt vorgesehen ist, welcher in mindestens ein Loch (L) eingreift.

8. Flexibler Aktor nach einem der vorangehenden Ansprüche, bei dem in der jeweiligen Parallelzone (PZ) mindestens je erstem Zugstrang (Z) ein Arretierungsmittel (SG) vorgesehen ist.

9. Flexibler Aktor nach einem der vorhergehenden Ansprüche, bei dem mindestens die Schraubenfeder (S) und die Zugstränge (Z,D) gegeneinander elektrisch isoliert und elektrisch leitend mit einer Stromquelle verbunden sind.

10. Flexibler Aktor nach Anspruch 9, bei dem mindestens ein Stellglied (SG) über elektrisch an der Schraubenfeder (S) und an einem Zugstrang (S,D) angeschlossen ist.

11. Flexibler Aktor nach Anspruch 10, bei dem mindestens ein erstes und ein zweites Stellglied (SG1,SG2) mindestens einen ersten, zweiten und dritten elektrischen Anschluß (A1,A2,A3) aufweist, wobei das jeweilige Stellglied durch Anlegen einer Spannung an den ersten und zweiten Anschluß betätigt wird, nach Betätigung den zweiten Anschluß mit dem dritten verbindet und der dritte Anschluß des ersten Stellgliedes mit dem Ersten Anschluß des Zweiten Stellgliedes elektrisch leitend verbunden ist.

12. Flexibler Aktor nach Anspruch 11, bei dem mindestens dem ersten, und dem zweiten elektrischen Anschluß (A1,A2,A3) jeweils ein Schalter (SI,S1) zur Unterbrechung des Stromkreises vorgeschaltet ist.

## Claims

1. Flexible actuator,
a) in which a helical spring (S) comprising at least one elastically deformable material is provided,
b) in which the cross-sectional area of a turn of the helical spring (S) has in the longitudinal direction of the helical spring an elongated profile (P) which has a bent-over edge (R1, R2) at each of its ends, the first edge (R1) being bent over towards the spring longitudinal axis and the second edge (R2) being bent over away from the spring longitudinal axis,
c) in which the helical spring (S) is configured in such a way that the respective first edge (R1) and the respective second edge (R2) of two adjacent turns (W1, W2) of the helical spring (S) overlap in an overlap zone,
d) in which the first and/or the second edge (R1, R2) is designed in the overlap zone in such a way that it extends essentially parallel to the respectively adjacent turn (W1, W2) of the helical spring (S), with the result that it forms a parallel zone (PZ) therewith,
e) in which there is provided at at least one location of a respective parallel zone (PZ) a controllable arresting means (SG) to which the mutual displaceability of the adjacent turns (W1, W2) can be blocked,
f) in which guide eyes (OE) are provided uniformly distributed on the circumference of the helical spring in such a way that they are situated on at least three first parallel axes in the direction in which the helical spring extends, which axes have virtually the same separation from one another,
g) in which first tension cables (Z1, Z2, Z3) which are all secured at the first end (E1) of the helical spring (S) are guided along the first parallel axes through the eyes (OE),
h) and in which a desired direction of movement is produced owing to the fact that tension is exerted on at least one of the tension cables (Z1, Z2, Z3) at the second end (E2) of the helical spring (S) and thereby, as a function of the at least one controllable arresting means (SG), the guide eyes (OE) through which this at least a first tension cable (Z1, Z2, Z3) is guided, are moved closer to one another.

2. Flexible actuator according to Claim 1,
a) in which uniformly distributed guide slots (SL) are provided on the circumference of the helical spring in such a way that they are situated on at least three second parallel axes, which have virtually the same separation from one another, in the direction in which the helical spring extends,
b) in which second tension cables (D1, D2, D3) are guided along the second parallel axes through the guide slots (SL) in such a way that they respectively embrace the mutually overlapping first and second edges in the form in each case of at least one loop, these second tension cables (D1, D2, D3) all being secured at the first end (E1) of the helical spring (S),
c) and in which a desired direction of movement is produced owing to the fact that tension is exerted on at least one of the tension cables (Z1, Z2, Z3, D1, D2, D3,) at the second end (E2) of the helical spring (S) and thereby, as a function of the at least one controllable arresting means (SG), the guide eyes (OE) through which this at least one first tension cable (Z1, Z2, Z3) is guided are moved closer to one another, or the mutually overlapping edges which this tension cable (D1, D2, D3) embraces are moved closer to one another.

3. Flexible actuator according to one of Claims 1 to 2, in which there is provided as arresting means a control element (SG) which has a blocking means (SB) which experiences a movement upon activation of the control element, the control element being secured on one of the adjacent turns (W1, W2) and blocks the respective other turn (W2, W1) with the blocking means.

4. Flexible actuator according to one of Claims 1 to 3, in which the first and second parallel axes are situated one above the other.

5. Flexible actuator according to one of Claims 1 to 4, in which the control element (SG) is designed at least as a thermal, hydraulic, magnetic, pneumatic, piezoceramic, or electrostatic control element.

6. Flexible actuator according to one of Claims 1 to 5, in which the arresting is performed by friction.

7. Flexible actuator according to one of the preceding claims, in which a rod (SB) which is of arbitrary cross section and engages in at least one hole (L) is provided as arresting means.

8. Flexible actuator according to one of the preceding claims, in which an arresting means (SG) is provided for at least each first tension cable (Z) in the respective parallel zone (PZ).

9. Flexible actuator according to one of the preceding claims, in which at least the helical spring (S) and the tension cables (Z, D) are electrically insulated from one another and are connected to a current source in an electrically conductive fashion.

10. Flexible actuator according to Claim 9, in which at least one control element (SG) is electrically connected to the helical spring (S) and to a tension cable (S, D).

11. Flexible actuator according to Claim 10, in which at least a first and a second control element (SG1, SG2) has at least a first, second and third electric connection (A1, A2, A3), the respective control element being actuated by applying a voltage to the first and second connection, after actuation the second connection being connected to the third one and the third connection of the first control element being connected in an electrically conductive fashion to the first connection of the second control element.

12. Flexible actuator according to Claim 11, in which a switch (SI, S1) for interrupting the circuit is respectively connected upstream of at least the first and the second electrical connection (A1, A2, A3).

## Revendications

1. Actionneur flexible
a) dans lequel est prévu un ressort hélicoïdal (S) composé d'au moins une matière déformable élastiquement,
b) dans lequel la surface de la section transversale d'une spire du ressort hélicoïdal (S) dans le sens longitudinal du ressort hélicoïdal présente un profil allongé (P), lequel possède à ses extrémités respectivement un bord faisant saillie (R1, R2), le premier bord (R1) faisant saillie vers l'axe longitudinal du ressort et le deuxième bord (R2) faisant saillie en s'éloignant de l'axe longitudinal du ressort,
c) dans lequel le ressort hélicoïdal (S) est configuré de telle manière que le premier bord respectivement (R1) et le deuxième bord respectivement (R2) de deux spires contiguës (W1, W2) du ressort hélicoïdal (S) se chevauchent dans une zone de chevauchement,
d) dans lequel le premier et / ou le deuxième bord (R1, R2) est réalisé dans la zone de chevauchement de sorte qu'il passe essentiellement en parallèle à la spire respectivement contiguë (W1, W2) du ressort hélicoïdal (S), afin de former avec elle une zone parallèle (PZ),
e) dans lequel à au moins un endroit d'une zone parallèle respective (PZ) est prévu un moyen d'arrêt pilotable (SG), avec lequel la mobilité des spires contiguës (W1, W2) l'une contre l'autre peut être bloquée,
f) dans lequel sur le pourtour du ressort hélicoïdal sont prévus des oeillets de guidage (OE), répartis uniformément, de manière à être situés dans le sens d'extension du ressort hélicoïdal sur au moins trois premiers axes parallèles, lesquels ont un écartement presque égal entre eux,
g) dans lequel, le long des premiers axes parallèles, des premières cordes de traction (Z1, Z2, Z3) traversent les oeillets (OE), lesdites cordes étant toutes fixées à une première extrémité (E1) du ressort hélicoïdal (S),
h) et dans lequel un sens de déplacement souhaité est obtenu en ce que sur l'une au moins des cordes de traction (Z1, Z2, Z3), à la deuxième extrémité (E2) du ressort hélicoïdal (S), est exercée une traction, et de ce fait, les oeillets de guidage (OE) que traverse cette au moins une première corde de traction (Z1, Z2, Z3), se rapprochent les uns des autres en fonction d'au moins un moyen d'arrêt pilotable (SG).

2. Actionneur flexible selon la revendication 1,
a) dans lequel sur le pourtour du ressort hélicoïdal sont prévues des fentes de guidage (SL), réparties uniformément, de sorte qu'elles se trouvent dans le sens d'extension du ressort hélicoïdal sur au moins trois deuxièmes axes parallèles lesquels ont un écartement presque égal entre eux,
b) dans lequel le long des deuxièmes axes parallèles, deux cordes de traction (D1, D2, D3) traversent les fentes de guidage (SL) afin qu'elles entourent à chaque fois les premiers et deuxièmes bords se chevauchant sous la forme à chaque fois d'au moins une boucle, ces deuxièmes cordes de traction (D1, D2, D3) étant toutes fixées à une première extrémité (E1) du ressort hélicoïdal (S),
c) et dans lequel un sens de déplacement souhaité est obtenu en ce que sur l'une au moins des cordes de traction (Z1, Z2, Z3, D1, D2, D3) une traction est exercée à la deuxième extrémité (E2) du ressort hélicoïdal (S), et de ce fait, en fonction du au moins un moyen d'arrêt pilotable (SG), les oeillets de guidage (OE) que traverse cette au moins une première corde de traction (Z1, Z2, Z3) se rapprochent les uns des autres, respectivement les bords se chevauchant, que cette corde de traction (D1, D2, D3) entoure, se rapprochent les uns des autres.

3. Actionneur flexible selon l'une des revendications 1 à 2, dans lequel est prévu un organe final (SG) comme moyen d'arrêt, lequel présente un moyen de blocage (SB), qui effectue un mouvement lors de la commande de l'organe final, l'organe final étant fixé à l'une des spires contiguës (W1, W2) et bloque l'autre spire (W2, W1) avec le moyen de blocage.

4. Actionneur flexible selon l'une des revendications 1 à 3, dans lequel les premiers et deuxièmes axes parallèles sont superposés.

5. Actionneur flexible selon l'une des revendications 1 à 4, dans lequel l'organe final (SG) est au moins réalisé comme un organe final thermique, hydraulique, magnétique, pneumatique, piézo-céramique ou électrostatique.

6. Actionneur flexible selon l'une des revendications 1 à 5, dans lequel l'arrêt a lieu par friction.

7. Actionneur flexible selon l'une des revendications précédentes, dans lequel est prévue, comme moyen d'arrêt, une barre (SB) de coupe transversale quelconque, laquelle s'engage dans au moins un trou (L).

8. Actionneur flexible selon l'une des revendications précédentes, dans lequel est prévu dans la zone parallèle respective (PZ) au moins un moyen d'arrêt (SG) à chaque première corde de traction (Z).

9. Actionneur flexible selon l'une des revendications précédentes, dans lequel au moins le ressort hélicoïdal (S) et les cordes de traction (Z, D) sont isolés électriquement l'un contre l'autre et sont reliés de façon conductrice à une source de courant.

10. Actionneur flexible selon la revendication 9, dans lequel au moins un organe final (SG) est raccordé de manière électrique au ressort hélicoïdal (S) et à une corde de traction (S, D).

11. Actionneur flexible selon la revendication 10, dans lequel au moins un premier et un deuxième organe final (SG1, SG2) présentent au moins un premier, un deuxième et un troisième raccord électrique (A1, A2, A3), l'organe final respectif étant actionné par application d'une tension sur le premier et le deuxième raccord, après actionnement relie le deuxième raccord au troisième et le troisième raccord du premier organe final est relié en étant conducteur au premier raccord du deuxième organe final.

12. Actionneur flexible selon la revendication 11, dans lequel à chaque fois un commutateur (SI, S1) est monté au moins en amont du premier et du deuxième raccord électrique (A1, A2, A3) pour interrompre le circuit électrique.
